Europäisches Patentamt

European Patent Office

Office européen des brevets

(19)

(11) Publication number : **0 226 629**
**B1**

(12) # EUROPEAN PATENT SPECIFICATION

(45) Date of publication of patent specification :
07.03.90

(21) Application number : 86904258.0

(22) Date of filing : 25.06.86

(86) International application number :
PCT/GB 86/00373

(87) International publication number :
WO/8700379 (15.01.87 Gazette 87/01)

(51) Int. Cl.⁵ : **H 04 N   5/645**

(54) IMPROVEMENTS IN OR RELATING TO CATHODE RAY TUBE MOUNTING ASSEMBLIES.

(30) Priority : 27.06.85 GB 8516271

(43) Date of publication of application :
01.07.87 Bulletin 87/27

(45) Publication of the grant of the patent :
07.03.90 Bulletin 90/10

(84) Designated contracting states :
AT BE CH DE FR GB IT LI LU NL SE

(56) References cited :
FR–A– 1 336 820
GB–A– 2 082 868

(73) Proprietor : PLESSEY OVERSEAS LIMITED
Vicarage Lane
Ilford Essex IG1 4AQ (GB)

(72) Inventor : HARTT, Peter
10 Brittain Road Hersham
Surrey (GB)
Inventor : BOWDERY, Kenneth
28 Tybenham Road Merton Park
London (GB)
Inventor : MEINECK, Frank
37 Amberley Gardens Stoneleigh
Epsom Surrey (GB)

(74) Representative : Allen, Derek
The Plessey Company plc Intellectual Property
Department Vicarage Lane
Ilford Essex, IG1 4AQ (GB)

EP 0 226 629 B1

## Description

The present invention relates to improvements in or relating to mounting assemblies for cathode ray tubes.

Cathode ray tubes are usually provided with mounting lugs located around the peripheral edge of the front face of the tube in close proximity to the implosion protection band provided on the tube. These mounting lugs are usually formed as an integral part of the tube. However, due to manufacturing tolerances these lugs do not normally lie within the same flatness plane. For commercial rectangular screen tubes having a mounting lug at each corner of the screen face, the plane of the mounting lugs can, typically, vary by approximately ± 2 mm.

Therefore, such tubes are normally mounted to a support chassis by means of threaded bolts which are located in holes provided in the mounting lugs. The bolts are provided with two nuts which can be run along the bolts to sandwich the mounting lugs and hence compensate for the out of plane positions of the mounting lugs.

This form of mounting for the cathode ray tube does not, however, permit a defective tube to be replaced quickly as the penetration of the bolts through the holes provided in the mounting lugs must be determined for each lug on each tube. Furthermore, such mounts do not provide much protection against mechanical shock as the strength in the mount is dependent upon the joint area between the mouting lugs and the vacuum tube.

The present invention seeks to alleviate these problems by providing a rugged mounting facility for a cathode ray tube which permits the front face contour of a cathode ray tube to be accurately positioned and enables a cathode ray tube to be readily removed or fitted into a display housing, and which provides a high degree of resistance to mechanical shock when compared to known forms of cathode ray tube mounts.

Accordingly, there is provided a cathode ray tube mounting assembly comprising at least one mounting block arranged for positioning over an implosion protection band of the cathode ray tube and, when arranged over the implosion protection band, for providing a cavity between a surface of the mounting block and an outer surface of the cathode ray tube for receiving an adhesive compound, and wherein the mounting block is adapted to secure on one side thereof a surround for the screen of the cathode ray tube and on the other side thereof to receive fixing means for securing the cathode ray tube to a support chassis.

The mounting block may include a channel on the surface of the block which defines a wall of the cavity for receiving the adhesive compound, the channel being adapted to receive a resilient sealing gasket for sealing the base and side portions of the cavity.

The channel may be of U configuration. Advantageously, the adhesive compound comprises epoxy resin.

In a preferred embodiment the cathode ray tube is provided with mounting lugs and the surfaces of the mounting blocks which define a wall of the cavity may each include a recess for accomodating a mounting lug of the cathode ray tube.

Preferably, the mounting assembly comprises four mounting blocks.

The present invention also provides a method of mounting a cathode ray tube, the method comprising positioning a mounting block around a mounting lug on the cathode ray tube and in juxtaposition to the exterior surface of the cathode ray tube thereby to form a cavity between the mounting block and the cathode ray tube, and introducing an adhesive compound into the cavity thereby to bond the mounting block to the cathode ray tube.

The present invention will now be described, by way of example, with reference to the accompanying drawings in which

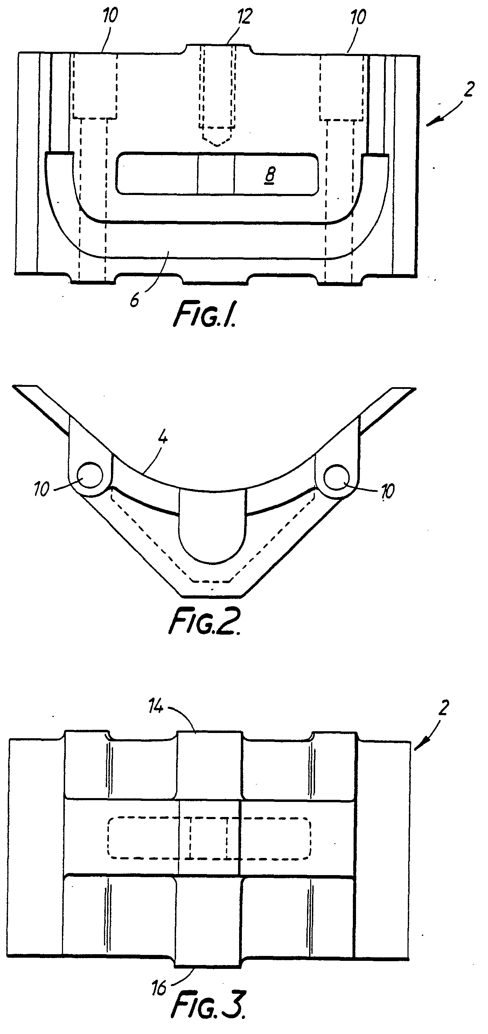

Figure 1 illustrates a front view of a mounting block for mounting a cathode ray tube to a display housing and a support chassis ;

Figure 2 illustrates a plan view of the mounting block shown in figure 1 ; and

Figure 3 illustrates a rear view of the mounting block shown in figure 1.

Referring to the drawings, a cathode ray tube mounting assembly comprises a mounting block 2 having an inner surface 4 provided with a channel 6 for receiving a resilient sealing gasket (now shown). The inner surface 4 is also provided with a recess 8 which is arranged to accomodate a mounting lug of the cathode ray tube ; which lugs are used to mount the tube in conventional cathode ray tube mounting systems. The mounting block 2 is also provided with bores 10 and 12 by means of which the mounting block 2 may be secured to a surround for the screen of the tube and a support chassis.

In use, the mounting block 2 is positioned over the implosion protection band, which is provided on the cathode ray tube, with the mounting lugs provided on the tube accomodated in the recesses 8. In the embodiment shown the mounting block 2 is designed to mount a square screen cathode ray tube. Hence, four of the mounting blocks 2 would be used, one at each corner of the screen of the tube, and the inner surface 4 is shaped so as to co-operate with the corner profile of the tube.

The channel 6, which in the embodiment shown is of U configuration, accomodates the resilient sealing gasket (not shown). The resilient sealing gasket ensures that, when the mounting block 2 is arranged about a corner of the cathode ray tube, the inner surface 4 is spaced slightly from the exterior surface of the tube to define a cavity between the mounting block 2 and the tube. The resilient sealing gasket also serves to seal the base and side perimeters of this cavity.

With the mounting block 2 held in this position, an adhesive compound, such as epoxy resin, is introduced into the cavity formed between the mounting block and the tube. The epoxy resin flows within the cavity to fill the recess 8 around the tube mounting lug and bonds the mounting block 2 to the tube. Prior to the introduction of the epoxy resin the positions of the mounting blocks 2 may be adjusted to compensate for any misalignment in the mounting lugs arising from the manufacturing tolerances of the tube. In this manner, surfaces 14 and 16 of the four mounting blocks 2 used in the mounting assembly are positioned so that they are, essentially, even though the mounting lugs of the tube do not lie in a common plane, coplanar. Hence, the cathode ray tube may be accurately positioned with respect to the screen surround and the mounting chassis and therefore, can be replaced quickly in the event of tube failure without the need for in situ adjustments to compensate for any misalignment of the tube mounting lugs.

Furthermore, the mounting assembly provides substantially improved shock and vibration resistance compared to known mounting systems for cathode ray tube.

Although the present invention has been described with respect to a particular embodiment it should be understood that modifications may be effected within the scope of the invention as claimed.

## Claims

1. A cathode ray tube mounting assembly comprising at least one mounting block arranged for positioning over an implosion protection band of the cathode ray tube and, when arranged over the implosion protection band, for providing a cavity between a surface of the mounting block and an outer surface of the cathode ray tube for receiving an adhesive compound, and wherein the mounting block is adapted to secure on one side thereof a surround for the screen of the cathode ray tube and on the other side thereof to receive fixing means for securing the cathode ray tube to a support chassis.

2. A cathode ray tube mounting assembly as claimed in claim 1 in which the mounting block has a channel on the surface of the block which defines a wall of the cavity for receiving the adhesive compound, the channel being adapted to receive a resilient sealing gasket for sealing the base and side portions of the cavity.

3. A cathode ray tube mounting assembly as claimed in claim 2 in which the channel has a substantially U-shaped configuration.

4. A cathode ray tube assembly as claimed in any one of claims 1 to 3 in which the adhesive compound comprises epoxy resin.

5. A cathode ray tube assembly as claimed in any one of claims 1 to 4 in which the cathode ray tube is provided with mounting lugs and the surfaces of the mounting blocks which define walls of the cavities each include a recess for accomodating a respective one of the mounting lugs of the cathode ray tube.

6. A cathode ray tube mounting assembly as claimed in any one of claims 1 to 5 in which the mounting assembly comprises four mounting blocks.

7. A method of mounting a cathode ray tube, the method comprising positioning a mounting block around a mounting lug on the cathode ray tube and in juxtaposition to the exterior surface of the cathode ray tube thereby to form a cavity between the mounting block and the cathode ray tube, and introducing an adhesive compound into the cavity thereby to bond the mounting block to the cathode ray tube.

## Patentansprüche

1. Eine Kathodenstrahlröhren-Einbau-Anordnung mindestens einen Einbaublock umfassend, vorgesehen für das Anordnen über ein Implosionsschutzband der Kathodenstrahlröhre und, wenn über dem Implosionsschutzband angeordnet, um einen Hohlraum zwischen einer Oberfläche des Einbaublocks und einer Aussenfläche der Kathodenstrahlröhre zu bilden für die Aufnahme eines Klebemittels, wobei der Einbaublock ausgebildet ist, um auf einer Seite davon eine Einfassung für den Schirm der Kathodenstrahlröhre zu sichern und um auf der anderen Seite davon, Festhaltemittel aufzunehmen für das Sichern der Kathodenstrahlröhre an einem Halterungs-Chassis.

2. Kathodenstrahlröhren-Einbau-Anordnung nach Anspruch 1, in welcher der Einbaublock einen Kanal in der Oberfläche des Blockes aufweist, die eine Wand des Hohlraumes für die Aufnahme des Klebemittels definiert, wobei der Kanal für die Aufnahme einer elastischen Dichtung ausgelegt ist für das Dichten der Basis und der Seitenpartien des Hohlraumes.

3. Kathodenstrahlröhren-Einbau-Anordnung nach Anspruch 2, in welcher der Kanal weitgehend u-förmig ausgebildet ist.

4. Kathodenstrahlröhren-Einbau-Anordnung nach irgendeinem der Ansprüche 1-3, in welcher das Klebemittel ein Epoxydharz umfasst.

5. Kathodenstrahlröhren-Einbau-Anordnung nach irgendeinem der Ansprüche 1 bis 4, in welcher die Kathodenstrahlröhre mit Einbaulaschen versehen ist, und die Oberfläche der Einbaublöcke, die Wände der Hohlräume bilden, je eine Aussparung umfassen, um je eine entsprechende Einbaulasche der Kathodenstrahlröhre aufzunehmen.

6. Kathodenstrahlröhren-Einbau-Anordnung nach irgendeinem der Ansprüche 1 bis 5, in welcher die Einbauanordnung vier Einbaublocks umfasst.

7. Verfahren zum Einbauen einer Kathodenstrahlröhre, umfassend das Positionieren eines Einbaublocks um eine Einbaulasche an der Kathodenstrahlröhre und neben der äusseren Oberfläche der Kathodenstrahlröhre, um so einen Hohlraum zwischen dem Einbaublock und der Kathodenstrahlröhre zu bilden, Einführen eines Klebemittels in den Hohlraum, um den Einbaublock mit der Kathodenstrahlröhre zu verbinden.

**Revendications**

1. Ensemble de montage de tube à rayons cathodiques, comprenant au moins un bloc de montage destiné à être positionné sur une bande de protection contre l'implosion du tube à rayons cathodiques et qui, lorsqu'il est placé sur la bande de protection, délimite une cavité entre une surface du bloc de montage et une surface externe du tube à rayons cathodiques afin qu'une composition adhésive puisse y être placée, et dans lequel le bloc de montage est destiné, d'un côté, à fixer un organe qui entoure l'écran du tube à rayons cathodiques et, de l'autre côté, à loger un dispositif de fixation du tube à rayons cathodiques sur un châssis de support.

2. Ensemble de montage de tube à rayons cathodiques selon la revendication 1, dans lequel le bloc de montage a un canal formé à la surface du bloc qui délimite une paroi de la cavité destinée à loger la composition adhésive, le canal étant destiné à supporter une garniture élastique assurant l'étanchéité entre la base et les parties latérales de la cavité.

3. Ensemble de montage de tube à rayons cathodiques selon la revendication 2, dans lequel le canal a une configuration sensiblement en U.

4. Ensemble à tube à rayons cathodiques selon l'une quelconque des revendications 1 à 3, dans lequel la composition adhésive est une résine époxyde.

5. Ensemble à tube à rayons cathodiques selon l'une quelconque des revendications 1 à 4, dans lequel le tube à rayons cathodiques a des pattes de montage et les surfaces des blocs de montage qui délimitent des parois des cavités ont chacune un évidement destiné à contenir une patte respective de montage du tube à rayons cathodiques.

6. Ensemble de montage de tube à rayons cathodiques selon l'une quelconque des revendications 1 à 5, dans lequel l'ensemble de montage comporte quatre blocs de montage.

7. Procédé de montage d'un tube à rayons cathodiques, le procédé comprenant le positionnement d'un bloc de montage autour d'une patte de montage formée sur le tube à rayons cathodiques afin qu'il soit juxtaposé à la surface externe du tube à rayons cathodiques de manière qu'une cavité soit formée entre le bloc de montage et le tube à rayons cathodiques, et l'introduction d'une composition adhésive dans la cavité afin que le bloc de montage soit fixé au tube à rayons cathodiques.

FIG.1.

FIG.2.

FIG.3.